# EUROPEAN PATENT APPLICATION

(11) **EP 1 510 140 A1**
(43) Date of publication of application: **02.03.2005**
(21) Application number: 03077705.6
(22) Date of filing: 29.08.2003
(51) Int. Cl.: A23L 1/30, A23L 1/24, A23D 7/00

(54) **Food compositions with ascorbic acid derivatives**

(71) Applicant: UNILEVER N.V., 3013 AL Rotterdam (NL)
(72) Inventor: Beindorff, Christiaan Michael, 3133 AT Vlaardingen (NL); Kooij, Stephanie, 3133 AT Vlaardingen (NL); Frenken, Leo Gerardus Joseph, 3133 AT Vlaardingen (NL); Lammers, Jannes Gerrit, 3133 AT Vlaardingen (NL)
(74) Representative: Kleiborn, Paul Erik

(57) **Abstract**

The invention concerns food compositions, comprising polyunsaturated fats, 2-substituted ascorbic acid derivatives, such as 2 - carbohydrates, 2 -phosphates and 2 -sulphates and 5 to 10,000 p.p.b. heavy meatel ions.

## Description

It is general prior art that fatty acids that contain more than one unsaturated double bond are sensitive to oxidation by oxygen. It is also common knowledge to add anti-oxidants to prevent that such oxidation can occur. A well known antioxidant that is applied herefore is e.g. ascorbic acid.(e.g.
US 6 184 009).However it is also known that ascorbic acid can act as an pro-oxidant, in particular in systems wherein metal ions from heavy metals are present and in particular wherein Fe and Cu ions are present. The mechanism underlying this behaviour is believed to include a step wherein the Fe and/or Cu ions are formed in the system in their active form by a regenerative radical reaction between the metal ions in the non-active form with ascorbic acid. The active form of the metal ions then can act as a catalyst for an oxidation reaction between fatty acid and oxygen.
Ascorbic acid is also often applied in food compositions because of the health benefits that are known for ascorbic acid. However this application is less attractive if the ascorbic acid acts as a pro-oxidant because the quality of the food product, in particular its taste will be harmed as a result of the development of an off-taste during storage of the food.

Although it is known [cf WO 03/57707 and Kumano c.s. in J Nutr Sci Vitaminol (Tokyo) 1998; 44, 30: 345-359] that a number of ascorbic acid derivatives, such as 2 O-(alpha glycosyl) ascorbic acid or ascorbic acid-2-phosphate or 2-sulphate, or ascorbic acid-2,6 diglycosyl or difatty acid derivatives hereof hydrolyse in vivo, liberating free ascorbic acid in the body, it is also disclosed that the 2-O-(beta glycosyl) ascorbic acid does not hydrolyse in vivo (cf WO 707 and JP HEI 3-13599), it was not known how the radical regeneration of the heavy metal ions active in the radical oxidation process could be prevented and therewith how the taste of a food product comprising heavy metal ions could be maintained over a long period.

We therefore studied how we could combine obtaining the health benefits of the presence of ascorbic acid moieties in a food product with the prevention of the occurrence of radical oxidation of poly unsaturated fatty acids present in the food product. This studied resulted in the finding of specific ascorbic acid derivatives that provide free ascorbic acid in the body, when eaten but that do not participate in the regeneration process of the active metal ions. More specifically we found that the use of ascorbic acid derivatives that are substituted in the 2-position with a sugar residue or with a phosphate residue or with a sulphate residue fulfilled our purposes, whereas other derivatives of ascorbic acid (e.g.6- ascorbyl palmitate) did not lead to satisfactory results or displayed undesirable side effects (e.g. ascorbic acid conjugated with kojic acid or with an O-phosporyl cholesterol group, cf US 5 951 990) The glycosyde compounds that we can use can have the sugar substituents both in the beta and in the alpha form.

Therefore our invention concerns in the first instance a food composition comprising fat, water and one or more of ascorbic acid derivatives wherein the fat is selected from fats with a content of polyunsaturated fatty acids with at least 18 carbon atoms (i.e. C18:2+) of more than 20 wt %, preferably more than 30 wt % and in particular more than 50 wt %, while the ascorbic acid derivative is selected from the group of substituted ascorbic acid derivatives or mixtures thereof that have a substitutent in the 2-position selected from sugar residues (alpha and/or beta ), phosphate residues and sulphate residues and wherein the food composition comprises 5 - 10.000. p.p.b of heavy metal ions, in particular selected from the group of Fe and Cu ions. Although both the alpha and the beta form are applicable we have a preference for the use of the alpha form.

Food compositions that can be used are in particular selected from the group consisting of emulsions based foods like margerines and spreads (any fat level), dressings, mayonnaises, ice cream, creams (dairy and non-dairy), sauces, soups, drinks, yoghurt and desserts.

Preferred ascorbic acid derivatives are the derivatives wherein the substituent is a carbohydrate, preferably typical sugars (e.g. a glucose, a fructose, a maltose or a mixtures thereof). The main advantage from these derivatives is that they can be applied at any food pH.(i.e. at pH from 2.5 to about 9.0). Ascorbic acid derivatives from 2-phospate and 2-sulphate were found to give the best results when the pH of the food product was 4.5 to 8.5, preferably 5.0 to 8.0.

The amount of ascorbic acid derivative in the food product can range considerably, but amounts of 0.005 to 0.9 wt % on food product give very satisfactory results.

The heavy metal ions in the food product can be introduced in the food product as part of the fat component but more likely this is introduced as part of the water phase applied in the food product. In general these amounts will range from 5 to 10,000 ppb, preferred amounts however range from 50 to 5,000 ppb and most preferably from 100 to 3,000 ppb on product.

The fat level of the food products can be any fat level for instance full fat (90%), half fat (40 %) and low fat food products (3%). In general we prefer fat levels of 20 to 60 wt %.

According to another embodiment our invention also concerns food composition wherein the ascorbic acid derivative is applied in the food composition to prevent the radical oxidation of the polyunsaturated fatty acid component of the food product catalysed by the presence of heavy metal ions in the food composition and/or to improve the taste of the food product.

### EXAMPLES.

### Stressed condition test with vitamin C derivatives

In the following experiments the effect of vitamin C derivatives ascorbyl palmitate (AP), ascorbic acid 2-phosphate (AA-2P) and ascorbic acid 2-glucoside (AA-2G) compared to ascorbic acid (AA) was investigated. The effect of pH condition and addition of vitamin E were studied. A so-called stressed condition test (SC-test) was used which is a screening test for rapid evaluation of taste stability of emulsions. Oil, water, emulsifier and other ingredients are added in the proper amount to a serum flask. The reference composition contains:
- 70% Sunflower Oil (=SF)
- 0.2% emulsifier (hymono)
- 30% millipore (= purified) water
- 0.0% ascorbic acid

The flask is capped and packed in tin foil to exclude light and placed in a climate controlled shaker at 60°C, 250 rpm. At the starting-point the headspace of the flasks contains 20.9% O₂. If no oxidation occurs, the taste and the amount O₂ will remain constant during the time. The speed of off-taste development and O₂ decrease (or O₂ consumption) is a measure for the stability of a given formulation. After each shaking period (24 and 48 h and 72 h) the samples were cooled to 20°C, the amount of O₂ in the headspace was determined and subsequently tasted. The taste was scored on off taste formation on a scale from 1 to 9 signifying:
1 = no taste defect
3 = slight taste defect
5 = taste defect
7 = strong taste defect
9 = very strong taste defect

A score of 5 or less is considered acceptable. When more then 50% of the panel members score above five the taste is considered unacceptable and the sample is rejected. It is represented in the following tables as taste score percentage above 5 (%>5). It is also depicted in the following figures with a dotted line at taste score five representing the border of acceptable or not acceptable taste.

### Stressed condition test with AA, AP, AA-2P and AA-2G

Five SF emulsions were composed containing 2.8 mmol/kg vitamin C, added as AA (500 mg/kg), AP (1177 mg/kg), AA-2P (727 mg/kg) and AA-2G (1000 mg/kg). The results are represented in table 1 and the taste score and oxygen content are visualized in figure 1.

**Table I**

| | **Taste score** | | | | | |
|---|---|---|---|---|---|---|
| **Sample** | **Average** | | | **% >5** | | |
| | **24h** | **48h** | **72h** | **24h** | **48h** | **72h** |
| 1 (Blank) | 2.5 ± 1.1 | 5.4 ± 1.5 | 6.3 ± 1.2 | 0 | 60 | 67 |
| 2 (500 mg/kg AA) | 3.0 ± 1.7 | 4.3 ± 2.2 | 6.7 ± 1.2 | 20 | 20 | 100 |
| 3 (1177 mg/kg AP) | 6.0 ± 2.4 | 7.0 ± 1.0 | - | 60 | 100 | - |
| 4 (727 mg/kg AA-2P) | 4.4 ± 1.9 | 8.2 ± 0.8 | - | 20 | 100 | - |
| 5 (1000 mg/kg AA-2G) | 2.3 ± 0.4 | 3.2 ± 1.5 | 4.0 ± 0.0 | 0 | 0 | 0 |

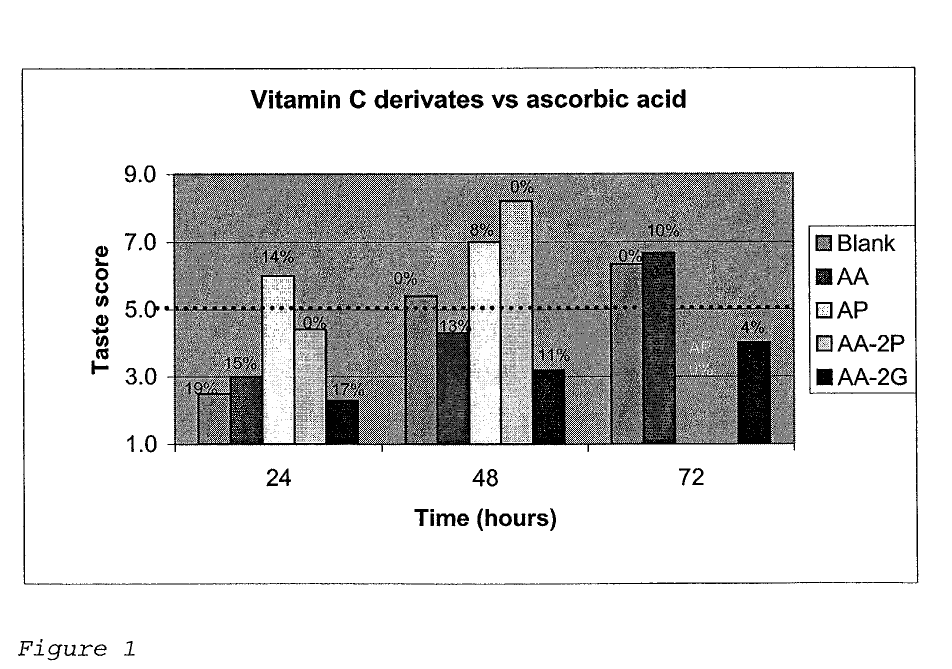

The best results were achieved with vitamin C derivative AA-2G. This sample was accepted by the taste panel even after 72 hours and seems to provide better results than the blank. The taste panel rejects samples with AP or AA-2P after 24 and 48 hours respectively as the sample produced with AA was rejected after 72 hours. After 24 hours no oxygen was left in the sample containing AA-2P. There was also, no oxygen left in the blank after 48 hours. The remaining oxygen content of the sample produced with AA was 10% after 72 hours but is scored too high in off-taste. These samples resulted in different pH values (Blank pH=5, AA pH= 3, AP pH=5, AA-2P pH= 7 and AA-2G pH= 3). Since different pH conditions can influence oxidation, this possibility was excluded by performing experiments at set pH conditions.

### Stressed condition test with AA, AA-2P and AA-2G at pH 5

The behaviour of vitamin C derivatives compared to AA was studied at pH conditions used in spreads. The pH of both the blank and the sample produced with AP was 5. Therefore AP was not tested in these trials, since it was already rejected in the former trials. To Samples produced with AA (pH= 3), AA-2P (pH= 7) and AA-2G (pH= 3) HCl or NaOH was added until pH 5 is reached. The results are given in table 2 and the taste score is depicted in figure 2.

**Table 2**

| **Sample** | **Taste score** | | | | | |
|---|---|---|---|---|---|---|
| | **Average** | | | **% >5** | | |
| | **24h** | **48h** | **72h** | **24 h** | **48 h** | **72 h** |
| 1 (Blank) | 4.4 ± 1.1 | 5.1 ± 2.2 | 7.8 ± 1.0 | 0 | 33 | 10 0 |
| 2 (500 mg/kg AA) | 7.2 ± 1.5 | 7.3 ± 2.1 | 7.8 ± 1.6 | 80 | 83 | 83 |
| 3 (727 mg/kg AA-2P) | 2.3 ± 0.7 | 3.4 ± 1.3 | 4.8 ± 1.5 | 0 | 0 | 33 |
| 4 (1000 mg/kg AA-2G) | 1.9 ± 0.9 | 3.2 ± 1.2 | 4.9 ± 0.6 | 0 | 0 | 33 |

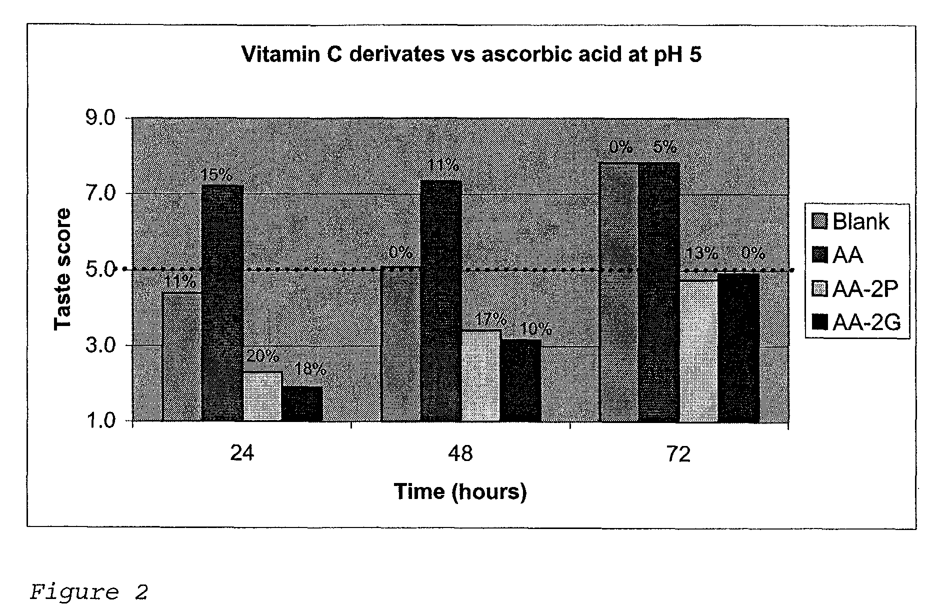

Again, the best results were achieved with vitamin C derivative AA-2G, but at pH 5 also with AA-2P. The remaining oxygen content in the sample produced with AA-2P was 13% after 72 hours compared to 0% in the sample containing AA-2G. The taste panel accepted both emulsions containing protected forms of vitamin C even after 72 hours. The taste panel rejected sample 2 containing AA after 24 hours and the blank after 48 hours

### Stressed condition test with AA, AP, AA-2P and AA-2G at pH 5 combined with tocopherol

It is known from literature that vitamins C and E (tocopherol) act synergistically (L. Packer et al., The antioxidant vitamins C and E, (2002), U.S.A.). To investigate the effect of a combination of vitamin C or vitamin C derivatives with tocopherol the same experiments are conducted, except that in these trials 500 mg/kg tocopherol is added. A Tocopherol mixture (Tocomix L-70) is used and the composition and metal content is presented in table 3. The results are given in table 4 and the taste score is illustrated in figure 4.

**Table 3**

| **TOCOMIX L-70** | **Component** | **Units** | **Content** |
|---|---|---|---|
| Tocopherol/Tocotrienol content | a-Tocoferol | mg/kg | 85034 |
| | b-Tocoferol | mg/kg | 12492 |
| | g-Tocoferol | mg/kg | 537769 |
| | d-Tocoferol | mg/kg | 180192 |
| | a-Tocotrienol | mg/kg | 1958 |
| | b-Tocotrienol | mg/kg | 0 |
| | g-Tocotrienol | mg/kg | 1609 |
| | d-Tocotrienol | mg/kg | 556 |
| | Total Toco | mg/kg | 819610 |
| | Vitamin E (Tocoferol) | mg/kg | 199386.5 |
| | Vitamin E (Tocotrienol) | mg/kg | 609.1 |
| | Vitamin E (all natural) | mg/kg | 199995.6 |
| Copper content | Cu | mg/kg | <0.001 |
| Iron content | Fe | mg/kg | 0.12 |

**Table 4**

| **Sample** | **Taste score** | | | | | |
|---|---|---|---|---|---|---|
| | **Average** | | | **% >5** | | |
| | **24h** | **48h** | **72h** | **24 h** | **48 h** | **72 h** |
| 1 (Blank) | 4.7 ± 1.6 | 6.5 ± 1.2 | 6.3 ± 1.8 | 43 | 80 | 67 |
| 2 (500 mg/kg AA) | 6.5 ± 2.3 | 6.8 ± 0.8 | 6.5 ± 1.3 | 71 | 100 | 67 |
| 3 (1177 mg/kg AP) | 6.5 ± 0.9 | 7.8 ± 1.6 | 8.0 ± 2.0 | 86 | 80 | 83 |
| 4 (727 mg/kg AA-2P) | 4.3 ± 1.8 | 3.8 ± 0.8 | 4.1 ± 1.4 | 43 | 0 | 17 |
| 5 (1000 mg/kg AA-2G) | 3.9 ± 1.3 | 3.0 ± 1.0 | 4.6 ± 1.4 | 14 | 0 | 17 |

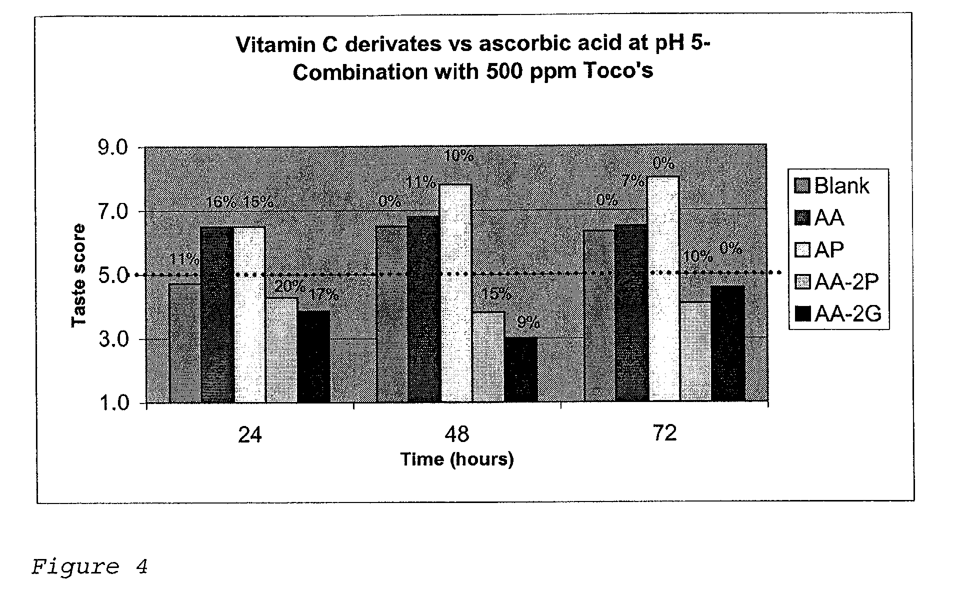

When comparing results from samples with and without Toco's at pH 5 it can be concluded that the results are comparable to experiments without vitamin E at pH 5 (see also figure 5). The synergistic effect of vitamin C and E known from literature is not perceived in these trials.

Altogether, the same trend is obtained in all trials with vitamin C derivatives (figure 5). It becomes clear that the best results are achieved with the derivative AA-2G and at pH 5 also with AA-2P.

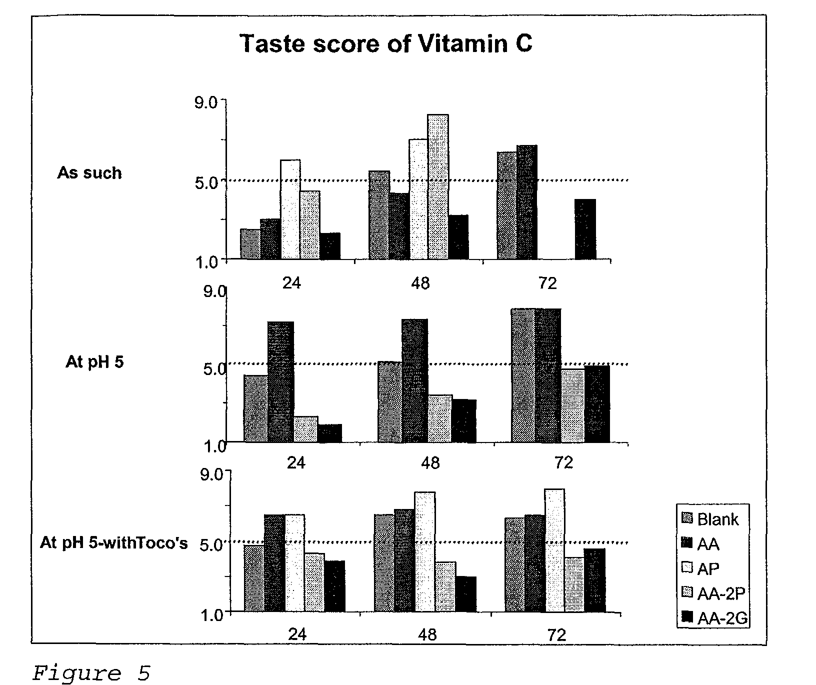

### Flora spread and dressings with ascorbic acid 2- glucoside

Feasibility experiments are performed to investigate the effect of ascorbic acid 2-glucoside in emulsion-based products. 1000 mg/kg AA-2G based on 2.8 mmol/kg AA was post-dosed to Flora Margarine, Calvé and Becel dressing resulting in 17% of the RDA per spread serving and 21% per serving of the dressings. As a comparison also 500 mg/kg (2.8 mmol/kg) ascorbic acid was post-dosed to these products. All samples were stored in the dark at room temperature (∼21°C) for 2 months. They were evaluated on taste after 3 days, 1 week, 4 weeks and 8 weeks after production. An off- taste was perceived in all samples produced with ascorbic acid almost directly after production. All products containing ascorbic acid 2-glucoside are found to be either comparable or better than the blank. Altogether, products are produced containing 500 mg/kg vitamin C based on 1000 mg/kg ascorbyl glucose maintaining taste stability of at least 8 weeks at room temperature when post-dosed to flora spread and Becel or Calvé dressings.

## Claims

1. Food composition comprising fat , water and one or more of ascorbic acid derivatives wherein the fat is selected from fats with a content of polyunsaturated fatty acids with at least 18 carbon atoms (i.e. C18:2+) of more than 20 wt %, preferably more than 30 wt % and in particular more than 50 wt %, while the ascorbic acid derivative is selected from the group of substituted ascorbic acid derivatives that have a substitutent in the 2-position selected from sugar residues ( alpha and / or beta ), phosphate residues and sulphate residues or mixtures thereof and wherein the food composition comprises 5 - 10,000. p.p.b of heavy metal ions, in particular selected from the group of Fe and Cu ions.

2. Food composition according to claim 1 wherein the food composition is an aqueous fat emulsion (either fat continuous or water continuous), preferably selected from the group consisting of emulsions based foods like margarine's and spreads (any fat level), dressings, mayonnaise's, ice cream, creams (dairy and non-dairy), sauces, soups, drinks, yoghurt and desserts.

3. Food composition according to claims 1 or 2 wherein the substituent is a carbohydrate, preferably typical sugars (e.g. a glucose, a fructose, a maltose or a mixtures thereof).

4. Food compositions according to any of claims 1 to 3 wherein the food composition comprises 0.005 to 0.9 wt % of the ascorbic acid derivative.

5. Food compositions according to any of claims 1 to 4 wherein the food composition comprises 50 to 5,000 ppb of heavy metal ions

6. Food composition according to any of claims 1 to 5 wherein the composition comprises 3% to 90% wt % of fat.

7. Food composition according to claims 1 to 6 wherein the ascorbic acid derivative is a 2-phosphate or a 2-sulphate derivative while the pH of the food composition is 4.5 to 8.5, preferably 5.0 to 8.0.

8. Food composition according to any of claims 1 to 7 wherein the ascorbic acid derivative mentioned in claim 1 is applied in the food composition to prevent the radical oxidation of the polyunsaturated fatty acid component of the food product catalysed by the presence of heavy metal ions in the food composition and/or to improve the taste of the food product.
